# DEMANDE DE BREVET EUROPEEN

(11) **EP 1 530 954 A2**
(43) Date de publication de la demande: **18.05.2005**
(21) Numéro de dépôt: 04026836.9
(22) Date de dépôt: 11.11.2004
(51) Int. Cl.: A61C 5/02

(54) **Manche pour instrument dentaire**

(30) Priorité: 14.11.2003 CH 19572003
(71) Demandeur: Prodonta S.A., 1207 Genève (CH)
(72) Inventeur: Chassot, Pierre-Yves, 01710 Thoiry (FR); Volckmann, Jean-Claude, 74380 Bonne (FR); Weill, David, 1268 Begnins (CH)
(74) Mandataire: Grosfillier, Philippe

(57) **Abrégé**

Le manche (1) pour instrument dentaire manuel, en particulier pour instrument d'endodontie destiné au traitement des canaux radiculaires est caractérisé en ce qu'il présente une forme à sections sensiblement semblables à des polygones dont les dimensions et les géométries évoluent le long de l'axe du manche, les faces des polygones étant raccordées selon des premières courbes et ces faces étant creusées selon de secondes courbes.

## Description

L'invention se rapporte au domaine de la chirurgie dentaire. Plus précisément, elle concerne un manche pour instrument dentaire manuel, en particulier pour instrument d'endodontie destiné au traitement des canaux radiculaires. Elle concerne également un instrument dentaire muni d'un tel manche.

Les instruments d'endodontie sont manuels ou mécaniques. Ils sont composés d'une partie active permettant le traitement des canaux radiculaires et d'un manche assurant l'interface entre la partie active et la main du praticien dans le cas d'un instrument manuel ou assurant l'interface entre la partie active et un dispositif de mise en mouvement dans le cas d'un instrument mécanique. La présente demande se rapporte à un manche d'instrument manuel.

Le traitement d'un canal radiculaire comprend une série d'opérations comme par exemple : l'exploration, le cathétérisme, l'irrigation, la mise en forme, le nettoyage, la désinfection, l'assèchement et l'obturation, nécessitant différents instruments d'endodontie employés successivement.

Le traitement des canaux radiculaires est délicat du fait des formes courbes variées des canaux et de leur difficulté d'accès. Il nécessite par conséquent un travail soigneux du praticien. Pour l'aider dans sa tâche, le manche doit permettre une bonne transmission des efforts des doigts à la partie active de l'instrument, un contrôle aisé des mouvements de l'instrument et un bon transfert d'informations de la partie active de l'instrument aux doigts.

Bien que les fonctions et les formes des instruments de traitement des canaux soient très variées, on s'aperçoit qu'il est nécessaire de limiter la géométrie des manches à quelques variantes seulement afin que le praticien soit habitué à ceux-ci, et qu'il puisse par conséquent le manipuler avec un maximum de dextérité et ressentir un maximum d'informations lors de l'utilisation de l'instrument.

Certaines formes du manche sont imposées par la fonction de l'instrument et par son utilisation. Il est généralement tenu entre le pouce et l'index et présente des dimensions limitées pour faciliter l'accès aux canaux à traiter.

Ainsi, on connaît des manches ayant des formes diverses en tonneau, en diabolo, allongées présentant une symétrie de révolution. L'axe de la partie active est alors confondu avec l'axe de symétrie du manche. Ces formes présentent également de manière générale une symétrie par rapport à un plan perpendiculaire à l'axe du manche.

Le but de l'invention est de fournir un manche présentant différentes innovations par rapport aux manches connus de l'art antérieur. En particulier, l'invention propose un manche permettant une tenue précise et sans crispation entre les doigts, un meilleur contrôle du mouvement de l'instrument et permettant de mieux ressentir les informations données par les contacts de la partie active sur la dent. La précision de la tenue entre les doigts du praticien doit permettre de prévenir les risques d déglutition de l'instrument, mais, surtout, doit prévenir les risques de rupture de la partie active de l'instrument. Le praticien doit aussi être capable de sentir la limite élastique de l'instrument.

Le manche selon l'invention est caractérisé par la partie caractérisante de la revendication 1.

Différentes variantes de ce manche sont définies par les revendications dépendantes 2 à 12.

La revendication 13 définit un instrument muni d'un tel manche.

Le dessin annexé représente, à titre d'exemple, un mode de réalisation du manche selon l'invention.

La figure 1 est une vue en perspective d'un instrument d'endodontie muni d'un mode de réalisation du manche selon l'invention.

La figure 2 est une vue en perspective de ce mode de réalisation du manche.

La figure 3 est une vue de face de ce mode de réalisation du manche.

La figure 4 est une section du manche au niveau du plan de coupe IV-IV représenté à la figure 3.

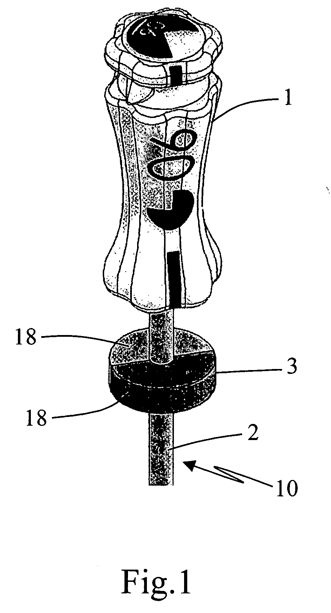

L'instrument d'endodontie 10 représenté à la figure 1 comprend un manche 1 auquel est liée une partie active 2 permettant une opération de traitement d'un canal radiculaire. La liaison entre le manche et la partie active est par exemple réalisée par moulage du manche autour d'une extrémité de la partie active. L'instrument 10 comprend également une rondelle 3 fixée de manière amovible sur sa partie active. Cette rondelle permet de repérer la longueur de la partie active utile au traitement du canal. Elle est radio-opaque. Elle présente de préférence des repères, tels que des portions de couleurs différentes (par exemple deux portions 18 de 180° ou quatre portions de 90° ) permettant d'apprécier visuellement l'amplitude du mouvement de rotation de la partie active de l'instrument. La frontière entre deux portions de couleurs différentes peut également permettre de repérer la position de l'angle d'attaque de la partie active.

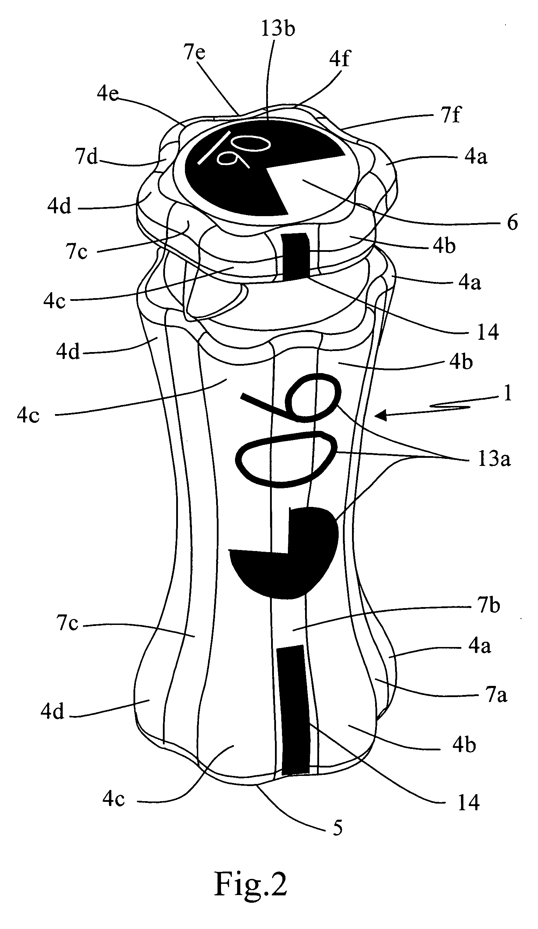

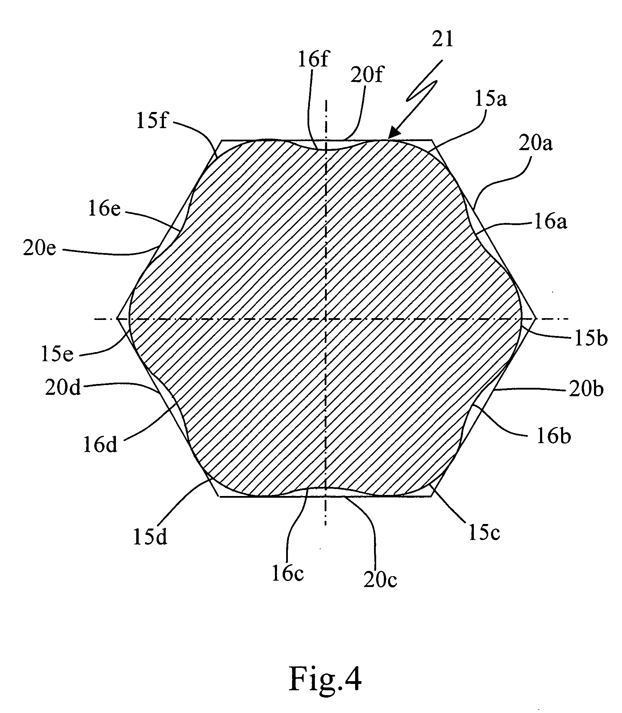

La manche 1 représenté à la figure 2 a une forme allongée ayant présentant des sections sensiblement hexagonales. Les différentes sections présentent, comme celle représentée à la figure 4, une base hexagonale 21, dont les faces 20a à 20f sont raccordées selon des arcs de cercle 15a à 15f et sont creusées selon des arcs de cercle 16a à 16f. Les différents arcs de cercle 15 étant raccordés directement aux différents arcs de cercle 16. Les différents arcs de cercles peuvent être raccordés les uns aux autres par d'autres courbes. Les sections pourraient également être définies par des courbes autres que des arcs de cercle. Les dimensions et les géométries des sections du manche évoluent le long de l'axe du manche. Le manche ainsi généré présente six bossages 4a à 4f s'étendant longitudinalement de l'extrémité inférieure 5 du manche à l'extrémité supérieure 6 du manche.

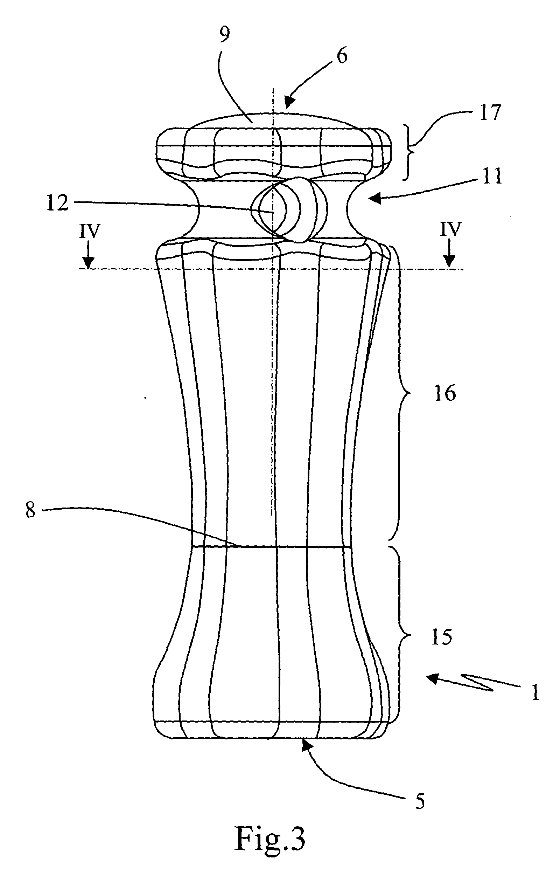

Comme représenté à la figure 3, le manche présente une section réduite 8. La distance de la section réduite 8 à l'extrémité supérieure 6 avoisine deux fois la distance de la section réduite 8 à l'extrémité inférieure 5. Les sections du manche au niveau de l'extrémité inférieure et au niveau de l'extrémité supérieure peuvent être sensiblement les mêmes, cependant, selon le type d'application du manche et, en particulier, selon le type de la partie active de l'instrument, les sections du manche au niveau de l'extrémité inférieure et au niveau de l'extrémité supérieure peuvent être choisies sensiblement différentes de manière à faciliter le contrôle de l'instrument par le praticien et/ou à améliorer la transmission d'informations de la partie active de l'instrument aux doigts du praticien. La géométrie et les dimensions des sections du manche évoluent progressivement de la section réduite 8 aux extrémités inférieures et supérieures. L'évolution des diamètres des sections est de nature à générer un profil, en forme de développante, ergonomique de tenue du manche entre les doigts du praticien. Le diamètre des sections évolue rapidement le long de la partie inférieure 15 de manière à former une butée s'opposant au glissement des doigts du praticien vers l'extrémité inférieure du manche.

L'extrémité supérieure 6 du manche présente un bombé 9 interdisant de poser l'instrument sur un plan avec sa partie active en l'air. A proximité, de la partie supérieure, le manche présente une gorge 11 ayant un profil de fond réalisé par un rayon. Au fond de cette gorge, un trou 12 traverse le manche diamétralement. Ce trou permet d'enfiler le manche sur un fil afin d'éviter les risques de déglutition de l'instrument par le patient, lorsque le praticien n'a pas installé de digue dans la bouche de celui-ci.

Le manche présente à son extrémité supérieure et sur les bossages et congés latéraux des symboles I.S.O. 13a et 13b caractérisant la partie active de l'instrument. Il présente également un repère 14 s'étendant longitudinalement permettant de matérialiser le plan dans lequel la partie active a été courbée avant de débuter une opération de traitement. En effet, du fait des formes courbes des canaux radiculaires, les parties actives d'instruments d'endodontie doivent quasi-systématiquement être déformés de manière permanente selon la forme du canal à traiter.

Le manche est par exemple réalisé en matières plastiques présentant une excellente moulabilité telle que les polyétherimides. Ces matières permettent en effet d'obtenir un état de surface sans aspérités susceptibles de retenir des particules, elles sont nettoyables avec les savons utilisés dans les cabinets et peuvent être stérilisées. Elles peuvent également être produites dans les différentes couleurs imposées par les normes I.S.O. De préférence, dans le but d'assurer une bonne nettoyabilité du manche aucune de ses surfaces n'est présentée sans un rayon de courbure de liaison.

La succession de bossages longitudinaux 4 raccordés par des congés 7 associée au rétrécissement de la section du manche au niveau du tiers de la hauteur du manche permettant une bonne prise du manche entre les doigts du praticien, en particulier entre le pouce et l'index. L'instrument pris entre deux doigts est calé en rotation par les bossages et longitudinalement par l'évolution de la section du manche de part et d'autre de la section réduite 8.

La succession de bossages permet notamment d'assurer un excellent contrôle d'amplitude de rotation du manche. En effet, lorsque le praticien tient le manche entre son pouce et son index, le passage d'une position dans laquelle les doigts se situent aux niveaux des congés 7b à 7e à une position dans laquelle les doigts se situent aux niveaux des congés 7c et 7f en faisant rouler le manche est très aisément ressenti du fait de l'action des bossages sur les doigts. L'ensemble des formes arrondies participe à la réduction de la crispation des doigts du praticien.

Une partie inférieure 15 du manche, s'étend de la section réduite 8 à l'extrémité inférieure 5. La forme de cette partie inférieure diverge vers l'extrémité inférieure du manche. Elle permet de contrôler la poussée exercée sur l'instrument et de ressentir les efforts s'opposant à cette poussée. Elle permet de renseigner le praticien sur les courbures et contre courbures du canal et sur les éventuelles calcifications rencontrées. Elle permet donc d'assurer la transmission de certaines informations des doigts du praticien à la partie active de l'instrument et de la partie active de l'instrument aux doigts du praticien.

Une partie supérieure 16 du manche, s'étend de la section réduite 8 à une gorge 11. La forme de cette partie supérieure diverge vers l'extrémité supérieure du manche. Elle permet de contrôler la traction exercée sur l'instrument et de ressentir les efforts s'opposant au retrait de l'instrument. Elle permet donc d'assurer la transmission de certaines informations des doigts du praticien à la partie active de l'instrument et de la partie active de l'instrument aux doigts du praticien.

Les géométries des sections du manche évoluent le long de son axe de manière à ce que la section réduite ait une forme au moins approximativement circulaire et à ce que les sections au niveau de ses extrémités aient une forme au moins approximativement hexagonale.

Une partie extrême 17 du manche est comprise entre la gorge 11 et l'extrémité supérieure 6. Cette partie a la forme d'une collerette permettant la préhension du manche. Elle permet un contrôle du couple de rotation exercé sur le manche. En effet, la déformation élastique, permise par la faible section du manche entre la partie extrême 17 et la partie supérieure 16, peut être appréciée en observant le mouvement de la partie supérieure ou inférieure du manche résultant du mouvement appliqué à la partie extrême du manche. La gorge 11 constitue une zone de fragilisation du manche calculée (à partir de ses dimensions et des caractéristiques constituant le manche), permettant d'assurer, par la rupture du manche à ce niveau, une limitation du couple que l'on peut appliquer à la partie active. On peut ainsi éviter la rupture de la partie active lors du travail de l'instrument. Toute autre type de fragilisation du manche autre qu'une gorge peut être réalisée. L'ensemble comprenant la gorge 11 et la partie extrême 17 constitue une butée s'opposant au glissement des doigts du praticien vers l'extrémité supérieure 6 du manche.

Les extrémités des parties inférieure, supérieure et extrême sont munies de rayons de courbures permettant de ne pas écraser, et de ne pas blesser les doigts du praticien.

La présence et le positionnement de la section réduite 8 sur le manche permet également d'assurer un bon contrôle de l'instrument et une bonne transmission d'informations de la partie active de l'instrument aux doigts du praticien lors de mouvements de déplacements de la partie active contre les parois des canaux radiculaires.

Le nombre de bossages réalisés sur le manche peut être différent de six. En particulier, selon le type d'application du manche et, en particulier, selon le type de la partie active de l'instrument, le nombre de bossages peut être compris entre 4 et 8.

## Revendications

1. Manche (1) pour instrument dentaire manuel, en particulier pour instrument d'endodontie destiné au traitement des canaux radiculaires, **caractérisé en ce qu'**il présente une forme à sections sensiblement semblables à des polygones (21) dont les dimensions et les géométries évoluent le long de l'axe du manche, les faces (20a à 20f) des polygones (21) étant raccordées selon des premières courbes (15a à 15f) et ces faces (20a à 20f) étant creusées selon de secondes courbes (16a à 16f).

2. Manche (1) selon la revendication 1, **caractérisé en ce que** les premières courbes (15a à 15f) sont raccordées directement ou indirectement aux secondes courbes (16a à 16f).

3. Manche (1) selon l'une des revendications précédentes, **caractérisé en ce que** ses sections ont sensiblement la forme de polygones réguliers (21) présentant 4 à 8 côtés.

4. Manche (1) selon l'une des revendications précédentes, **caractérisé en ce qu'**il présente une section réduite (8) sensiblement au niveau du tiers de sa longueur séparant le manche en une partie supérieure (16) et en une partie inférieure (15), la géométrie et les dimensions des sections évoluant progressivement en se rapprochant des extrémités (5,6) du manche.

5. Manche (1) selon la revendication précédente, **caractérisé en ce que** les diamètres maximums des parties inférieure et supérieure sont supérieurs au diamètre de la section réduite et **en ce que** les diamètres maximums des parties inférieure et supérieure sont égaux ou différents.

6. Manche (1) selon la revendication précédente, **caractérisé en ce que** les diamètres de ses sections évoluent le long de son axe de manière à générer un profil ergonomique de tenue du manche entre les doigts du praticien, le profil ayant une forme de développante.

7. Manche (1) selon la revendication précédente, **caractérisé en ce que** le diamètre de ses sections évolue rapidement le long de sa partie inférieure (15) de manière à former une butée au glissement des doigts du praticien vers l'extrémité inférieure (5) du manche.

8. Manche (1) selon la revendication précédente, **caractérisé en ce que** sa forme latérale est raccordée à ses extrémités (5, 6) par des rayons.

9. Manche (1) selon la revendication précédente, **caractérisé en ce que** les géométries de ses sections évoluent le long de son axe de manière à ce que la section réduite ait une forme au moins approximativement circulaire et à ce que les sections au niveau de ses extrémités aient une forme au moins approximativement polygonale.

10. Manche (1) selon l'une des revendications précédentes, **caractérisé en ce qu'**il présente une zone fragilisée (11) à proximité d'une de ses extrémités, dite supérieure (6), permettant de limiter le couple appliqué à la partie active, la zone fragilisée délimitant une partie du manche dite partie extrême (17).

11. Manche (1) selon la revendication précédente, **caractérisé en ce que** la zone fragilisée (11) comprend une gorge (11) et **en ce que** la partie extrême (17) du manche a la forme d'une collerette permettant la préhension du manche, la gorge et la collerette constituant une butée au glissement des doigts du praticien vers l'extrémité supérieure (6) du manche.

12. Manche (1) selon l'une des revendications précédentes, **caractérisé en ce que** les premières courbes (15a à 15f) et les secondes courbes (16a à 16f) sont des arcs de cercles.

13. Instrument dentaire (10) comprenant une partie active (2) et un manche (1) selon l'une des revendications 1 à 10.
